# FASCICULE DE BREVET EUROPEEN

(11) **EP 3 521 667 B1**
(45) Date de publication et mention de la délivrance du brevet: **05.08.2020**
(21) Numéro de dépôt: 19155076.3
(22) Date de dépôt: 01.02.2019
(51) Int. Cl.: F16J 15/06, F16J 15/10

(54) **GARNITURE D'ÉTANCHÉITÉ POUR UNE STRUCTURE D'UN VÉHICULE FERROVIAIRE**
DICHTUNG FÜR EINE STRUKTUR EINES SCHIENENFAHRZEUGS
SEAL FOR A STRUCTURE OF A RAIL VEHICLE

(30) Priorité: 05.02.2018 FR 1850926
(43) Date de publication de la demande: 07.08.2019
(73) Titulaire: ALSTOM Transport Technologies, 93400 Saint-Ouen (FR); AMCO, 95310 Saint Ouen l'Aumône (FR)
(72) Inventeur: GUILLOTEAU, Isabelle, 17440 AYTRE (FR); GEISS, Vincent, 17440 AYTRE (FR); GAUDIN, Philippe, 79210 LE BOURDET (FR); GRENET, Jean-François, 95310 Saint-Ouen-l'Aumône (FR); MAISSINE, Maelainin, 95310 Saint-Ouen-l'Aumône (FR); DESFONTAINE, Caroline, 95310 Saint-Ouen-l'Aumône (FR)
(74) Mandataire: Lavoix

(56) Documents cités:
- WO-A1-03/048470
- FR-A1- 3 012 563
- US-B1- 9 803 357

## Description

La présente invention concerne un véhicule ferroviaire, dont une structure est pourvue d'une garniture d'étanchéité.

Les véhicules ferroviaires connus, tels que les trains, les métros ou les tramways, comportent différentes structures, telles qu'une caisse, un châssis, ou une armoire technique, dont l'intérieur nécessite d'être rendu étanche à l'eau de l'extérieur. Ces structures comportent généralement une ou plusieurs ouvertures qui sont chacune fermée par un moyen de fermeture amovible, par exemple une porte, une trappe de visite, une simple plaque, une fenêtre, un passe-câbles, ou similaire. Pour rendre étanche cette fermeture amovible, on prévoit généralement une garniture d'étanchéité interposée entre ce moyen de fermeture amovible et le pourtour de l'ouverture.

En matière de protection des passagers et du personnel à bord de ces véhicules, l'application de nouvelles exigences impose désormais de prévoir, outre une protection de la structure contre l'eau, une protection renforcée contre le feu, les gaz chauds d'incendies, et les incendies. Par conséquent, il est nécessaire de modifier chaque véhicule ferroviaire afin de les rendre conforme à ce nouveau standard.

Ces modifications peuvent s'avérer coûteuses et difficiles à mettre en œuvre sur les véhicules ferroviaires existants, notamment lorsque la superficie de la surface d'appui prévue pour la garniture d'étanchéité à l'eau est insuffisante pour prévoir en outre des moyens de protection contre les incendies. Pour tous les véhicules ferroviaires, la mise en place cumulative de garnitures d'étanchéité à l'eau et de protection contre les incendies complique la conception et la fabrication des véhicules, notamment à cause de la nécessité de référencer ces moyens supplémentaires, de les stocker et de les intégrer aux véhicules au prix d'une étape supplémentaire. Des garnitures combinant l'étanchéité à l'eau et la protection incendie sont connues pour un usage dans le bâtiment; voir par exemple WO-A-03/048470.

L'invention vise donc à proposer une structure qui facilite le renforcement de la protection contre le feu, les gaz chauds et les incendies, pour des véhicules ferroviaires.

L'objet de l'invention est défini dans la revendication 1.

Grâce à l'invention, on obtient une garniture d'étanchéité qui assure à la fois une fonction d'étanchéité à l'eau et de protection contre les incendies. Ainsi, sur les véhicules ferroviaires existants, il suffit de remplacer les anciennes garnitures d'étanchéité à l'eau, n'offrant pas une protection suffisante contre les incendies, par la garniture d'étanchéité de l'invention, laquelle offre cette protection contre les incendies grâce à la couche intumescente, qui peut notamment être une couche centrale, interposée entre deux couches externes d'étanchéité à l'eau. Ce remplacement par les nouvelles garnitures d'étanchéité peut être effectué relativement facilement, par exemple au cours d'une simple opération de maintenance de routine. La garniture d'étanchéité de l'invention peut également être intégrée aux nouveaux véhicules ferroviaires comme s'il s'agissait de simples garnitures d'étanchéité à l'eau, de sorte qu'aucune modification de conception n'est requise pour renforcer leur niveau de protection contre les incendies.

D'autres caractéristiques optionnelles et avantageuses de l'invention sont définies dans ce qui suit :
- le matériau intumescent est configuré pour évoluer d'un état initial à un état réagi sous l'application d'une température de réaction comprise entre 150 et 180 degrés Celsius ;
- lorsque la couche intumescente est à l'état initial, la couche intumescente présente une épaisseur comprise entre 0,5 et 1 millimètre,
- lorsque la couche intumescente est à l'état initial, la couche intumescente présente de préférence une épaisseur de 2 millimètres ;
- lorsque la couche intumescente est à l'état initial, la couche intumescente présente une épaisseur comprise entre 0,5 et 2 millimètre ;
- lorsque la couche intumescente est à l'état initial, la couche intumescente présente de préférence une épaisseur de 1 millimètre ;
- chaque couche d'étanchéité comprend une mousse d'élastomère à cellules fermées ;
- la mousse d'élastomère est en caoutchouc EPDM ;
- chaque couche d'étanchéité présente une épaisseur comprise entre 1 et 3 millimètre, de préférence 2 millimètres ;
- le véhicule comprend au moins un bogie et un châssis inférieur supporté par le bogie, le châssis inférieur comprenant la structure incluant la garniture d'étanchéité, la structure constituant une séparation entre un environnement extérieur et un espace intérieur du véhicule ferroviaire ; et la structure comprend au moins un élément allongé tel qu'un câble ou un conduit, traversant la plaque.
- le véhicule ferroviaire comprend au moins une armoire technique, renfermant un équipement dans un volume interne de l'armoire technique, pour assurer le fonctionnement d'un système de motorisation et/ou de freinage du véhicule ferroviaire, l'armoire technique comprenant la structure incluant la garniture d'étanchéité, la structure constituant une séparation entre le volume interne et un espace extérieur périphérique de l'armoire technique.

L'invention sera mieux comprise à l'aide des exemples décrits ci-dessous à titre non limitatif, en référence aux dessins annexés dans lesquels :
- La figure 1 est une vue en coupe transversale dune structure selon un premier mode de réalisation ;
- La figure 2 est une vue en coupe transversale d'une structure d'un véhicule ferroviaire équipée d'une garniture d'étanchéité selon un deuxième mode de réalisation conforme à l'invention ; et
- La figure 3 est une vue de face de la structure de la figure 2.

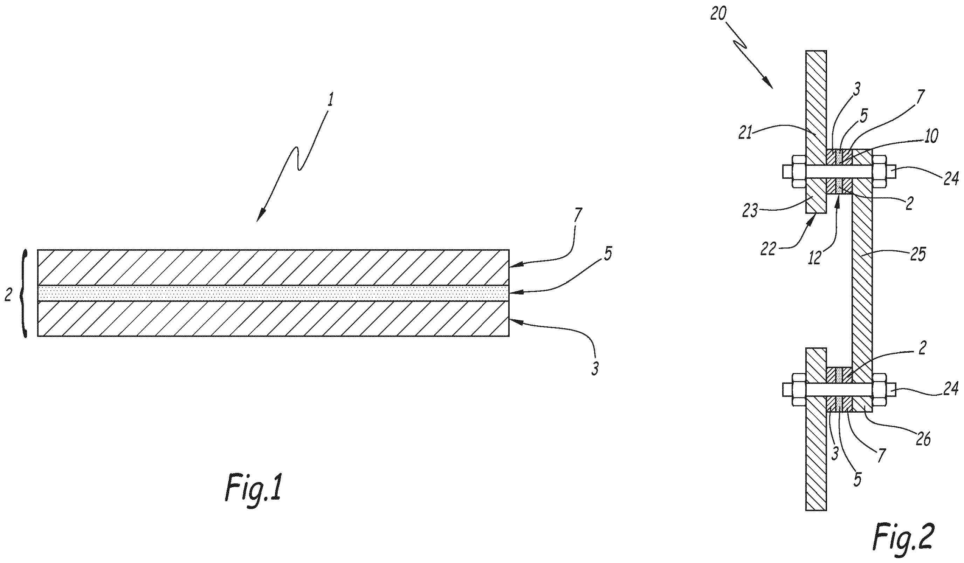

La figure 1 illustre une plaque 1 de matériau multicouche 2, c'est-à-dire un matériau stratifié. Ce matériau multicouche 2 comprend des couches 3, 5 et 7 successives dans cet ordre. Les deux couches externes 3 et 7 sont des couches d'étanchéité à l'eau, alors que la couche centrale 5, interposée entre les couches 3 et 7, comprend un matériau intumescent.

Cette plaque 1 peut avantageusement être découpée à la main ou à la machine, par exemple à l'aide d'un outil à lame tel qu'une scie, afin de former une garniture d'étanchéité de la forme souhaitée, pour laquelle les couches 3, 5 et 7 sont préférentiellement présentes sur toute la superficie.

En variante, plutôt qu'une plaque telle que la plaque 1, on fournit le matériau multicouche 2 sous la forme d'une bande que l'on peut couper à la longueur souhaitée, une telle bande pouvant être avantageusement enroulée sous la forme d'un rouleau.

Quelle que soit la variante, de préférence, les couches 3, 5 et 7 sont immédiatement successives. Toutefois, on peut prévoir l'adjonction de couches intermédiaires d'autres matériaux si nécessaire.

Les différentes couches 3, 5 et 7 sont rapportées les unes contre les autres, c'est-à-dire liées entre elles, de façon permanente. Cette liaison est effectuée au cours de la fabrication du matériau multicouche 2. De préférence, la liaison est effectuée par adhésivage ou par collage.

La couche centrale 5 comprend, et est préférentiellement exclusivement formée par, un matériau intumescent. Par « matériau intumescent », on entend un matériau configuré pour évoluer d'un état initial, tel qu'illustré sur la figure 1, à un état réagi, non illustré, dans lequel le matériau se dilate ou enfle de façon très importante, par exemple de façon à doubler son volume ou davantage, sous l'application d'une température de réaction suffisamment élevée sur le matériau intumescent, pendant une durée de réaction suffisante. En particulier, le volume du matériau intumescent peut être multiplié par une valeur de l'ordre de dix ou vingt. De préférence, on choisit le matériau intumescent pour que la température de réaction soit comprise entre environ 150 et 180°C.. A l'état réagi, le matériau intumescent est avantageusement étanche aux gaz chauds de l'incendie, et empêche le feu de traverser.

Par exemple, le matériau intumescent peut être un matériau composite, comprenant un graphite dilatable et un liant, notamment polymère, dans lequel le graphite est réparti. Le matériau intumescent a pour propriété de s'étendre fortement à partir d'une température prédéterminée, sous l'effet d'une source de chaleur portant le matériau au-dessus de cette température. Cette expansion est par exemple le résultat d'un moussage du matériau intumescent.

Chaque couche 3 et 7 d'étanchéité à l'eau comprend de préférence une mousse d'élastomère à cellules fermées. Ce type de mousse est à la fois étanche à l'eau, tout en étant compatible avec le matériau intumescent de la couche 5, notamment pour être lié à ce matériau intumescent. De préférence, on prévoit une mousse d'élastomère en caoutchouc EPDM (éthylène-propylène-diène monomère). Ce matériau particulier commence à ramollir seulement lorsqu'il est porté à une température supérieure à 150°C, ce qui correspond préférentiellement à la température au-dessus de laquelle le matériau intumescent commence également à réagir.

En fonction de l'application, tout autre matériau de la même faille que celle de l'EPDM, ou tout autre matériau d'étanchéité à l'eau approprié, peut être choisi pour l'une ou les deux couches 3 et 7.

De façon préférentielle, on choisit :
- un matériau pour la couche d'étanchéité, qui commence à ramollir lorsque ce matériau est porté à une température supérieure ou égale à une valeur prédéterminée, et
- un matériau pour la couche intumescente, qui commence à réagir lorsque ce matériau est porté à une température supérieure ou égale à la même valeur prédéterminée.

Lorsque le matériau multicouche 2 est dans une forme non compressée, comme c'est le cas sur la figure 1, et que la couche centrale 5 est à l'état initial, cette couche 5 présente préférentiellement une épaisseur comprise entre 0,5 et 1 millimètre. Alternativement, la couche intumescente peut présenter une épaisseur comprise entre 0,5 et 2 millimètres. De préférence, la couche intumescente présente une épaisseur de 2 millimètres. Alternativement, la couche intumescente peut présenter une épaisseur de 1 millimètre. En fonction de l'application on peut choisir une épaisseur différente.

Lorsque le matériau multicouche 2 est dans une forme non compressée, comme c'est le cas sur la figure 1, chaque couche externe présente préférentiellement une épaisseur comprise entre 1 et 3 millimètre, de préférence 2 millimètres. En fonction de l'application, on peut choisir une épaisseur différente.

Lorsque le matériau multicouche 2 est utilisé en tant que garniture d'étanchéité en étant interposé entre deux éléments, on prévoit que les couches 3 et 7 sont en contact respectivement avec ces deux éléments. On préfère mettre le matériau multicouche 2 sous une forme compressée, par écrasement entre les deux éléments susmentionnés, les couches 3, 5 et 7 étant déformées en conséquence.

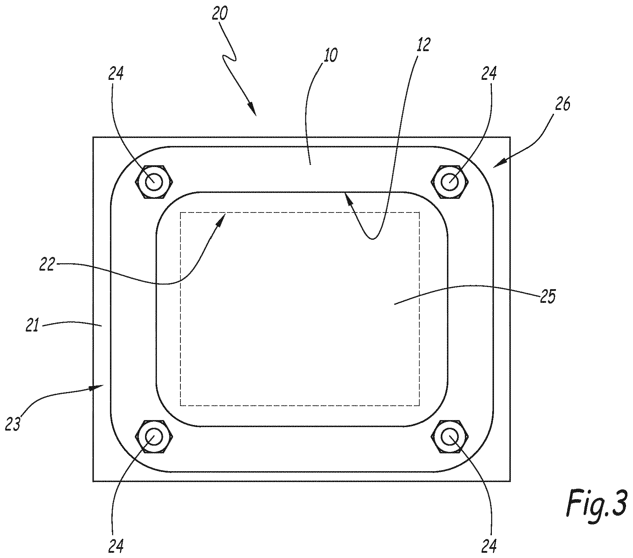

Sur les figures 2 et 3, une structure à isoler 20 comprend un panneau 21 pourvu d'une ouverture 22 délimitée par un pourtour d'ouverture 23 du panneau 21. La structure à isoler 20 comprend également une plaque 25 de fermeture de l'ouverture 22. Cette plaque 25 présente un pourtour de plaque 26. La plaque 25 est rapportée et fixée sur le panneau 21, par exemple à l'aide de boulons 24. En variante, on pourrait prévoir d'autres moyens de fixation que des boulons 24, par exemple des rivets ou des points de soudure, ou un système facilitant l'ouverture de l'ouverture 22, comprenant par exemple une serrure et des gonds. De préférence, la fixation de la plaque 25 est amovible, par exemple en dévissant les boulons. La plaque 25 ainsi rapportée recouvre au moins partiellement l'ouverture 22. On prévoit que le pourtour de plaque 26 recouvre alors le pourtour d'ouverture 23, au moins en partie, de préférence totalement.

Dans le mode de réalisation des figures 2 et 3, on a le même matériau multicouche 2 que celui de la figure 1, lequel a été découpé sous la forme d'une garniture d'étanchéité 10, en forme de cadre essentiellement rectangulaire, au sein duquel peut être ménagée une ouverture centrale 12. De manière générale, la garniture d'étanchéité 10 présente une forme correspondant à celle du pourtour d'ouverture 23. On préfère que la garniture d'étanchéité 10 recouvre tout le pourtour d'ouverture 23 sur toute sa périphérie, tout en entourant l'ouverture 22 sans la recouvrir. La garniture 10 est interposée entre le pourtour d'ouverture 23 et le pourtour de plaque 26. Les couches 3 et 7 sont respectivement en contact avec le pourtour d'ouverture 23 et avec le pourtour de plaque 26. La garniture est interposée entre le panneau 21 et la plaque 25 sous la forme compressée, des efforts de compression convergents étant appliqués par les pourtours 23 et 26 sur la garniture 10, dans le présent exemple par serrage des boulons 24. Sous cette forme compressée, l'étanchéité à l'eau, ou plus généralement aux liquides, est assurée par la garniture 10 entre une face et l'autre du panneau 21, notamment grâce aux couches 3 et 7. Lorsque le matériau intumescent de la couche 5 passe à l'état réagi alors que la garniture est sous la forme compressée, l'étanchéité aux gaz chauds de l'incendie et au feu est assurée par la garniture 10, notamment grâce à cette couche 5. On choisit avantageusement le matériau des couches 3 et 7 pour qu'il soit fusible, par exemple pour une température supérieure ou égale à environ 150°C, de sorte à laisser la place au matériau intumescent de s'étendre à l'état réagi.

De manière optionnelle, la plaque 25 est pourvue d'une ou plusieurs ouvertures la traversant, chacune prévue pour le passage d'un câble ou d'un conduit de liquide ou de gaz.

Le découpage de la garniture d'étanchéité 10 à la forme souhaitée peut avoir été effectué sur place, au moment du montage du matériau multicouche 2 entre les éléments 21 et 25. Alternativement, on peut prévoir que la garniture d'étanchéité 10 est fournie pré-conformée à la forme souhaitée, ce qui évite d'effectuer l'opération de découpage d'une plaque ou d'une bande de matériau multicouche 2 sur place.

La structure 20, comprenant la garniture d'étanchéité 10, appartient à un véhicule ferroviaire. Ce véhicule ferroviaire est par exemple un train, un tramway ou un métro.

De façon préférentielle, le véhicule comprend un ou plusieurs bogies par l'intermédiaire desquels il peut rouler sur un réseau de rails. Le véhicule comprend un châssis inférieur supporté par le ou les bogies. Le véhicule ferroviaire comprend de préférence un système de motorisation de traction, par exemple incluant au moins un moteur à énergie électrique ou à carburant embarqué dans le véhicule. Le véhicule ferroviaire comprend de préférence un système de freinage, qui comprend par exemple au moins un frein et un actionneur pneumatique pour ce frein.

Le véhicule comprend avantageusement une ou plusieurs armoires techniques, renfermant de l'équipement dans un volume interne respectif de ces armoires techniques. De préférence, l'équipement est électrique, pneumatique, hydraulique, ou est un équipement de télécommunication. De préférence, l'équipement assure l'alimentation, le fonctionnement, et/ou le pilotage :
- de la motorisation de traction, et/ou
- du système de freinage, et/ou
- d'équipements auxiliaires du véhicule ferroviaire, tels que l'éclairage à bord, l'air conditionné, les portes automatiques, etc.

Par exemple, cet équipement est un équipement électrique comprenant des convertisseurs de courant électrique pour l'alimentation et le pilotage de la motorisation. On pourrait alternativement prévoir que l'équipement est un équipement pneumatique pour alimenter et piloter le système de freinage du véhicule ferroviaire. On pourrait alternativement prévoir que l'équipement est un équipement de télécommunication, préférentiellement critique pour la conduite du véhicule ferroviaire ou pour la sécurité.

Dans un premier mode de réalisation, le châssis inférieur comprend la structure 20 des figures 2 et 3, incluant la plaque 25, la garniture d'étanchéité 10 et le panneau 21. Cette structure 20 constitue avantageusement une séparation ou barrière étanche entre :
- un environnement extérieur, notamment pour une partie de cet environnement extérieur située sous le véhicule ferroviaire, par exemple au voisinage des rails et/ou des bogies et/ou d'une partie extérieure du système de freinage, et
- un espace intérieur du véhicule ferroviaire, dans lequel sont transportés du personnel de bord, des passagers et/ou des marchandises.

En cas d'incendie généré par accident, vandalisme ou terrorisme, dans l'environnement extérieur, l'espace intérieur est protégé. L'espace intérieur est également protégé de toute infiltration d'eau, par exemple suite à des intempéries, suite à un lavage du véhicule avec une solution contenant de l'eau, notamment à l'aide d'une machine de lavage, ou encore suite à l'apparition de condensation.

De manière optionnelle, la structure 20 comprend un ou plusieurs éléments allongés, tel qu'un câble ou un conduit, traversant la plaque 25 de part en part. L'étanchéité entre la plaque 25 elle-même et l'élément allongé est préférentiellement assurée par une autre garniture d'étanchéité, éventuellement réalisée dans le même matériau multicouche 2.

Dans un deuxième mode de réalisation, l'armoire technique comprend la structure 20, et en particulier la plaque 25, la garniture d'étanchéité 10 et le panneau 21. La structure 20 forme par exemple une paroi de l'armoire technique, pour délimiter le volume interne contenant l'équipement. La structure 20 constitue alors une séparation entre le volume interne et un espace extérieur de l'armoire technique, hors du volume interne. Cet espace extérieur peut être compris dans l'espace intérieur du véhicule ferroviaire, ou dans l'environnement extérieur du véhicule ferroviaire.

En cas d'incendie généré par accident, vandalisme ou terrorisme, dans l'espace extérieur périphérique de l'armoire technique, le volume intérieur et son équipement est protégé. Le volume intérieur est également protégé de toute infiltration d'eau. L'espace extérieur périphérique de l'armoire technique peut aussi être protégé d'un incendie déclenché dans le volume intérieur : en particulier les personnes susceptibles de se trouver dans l'espace extérieur ne sont pas exposées à des fumées et la propagation du feu est circonscrite au volume intérieur de l'armoire technique, au moins pendant une certaine durée, susceptible de permettre l'évacuation des personnes.

Selon d'autres modes de réalisation, la structure du véhicule ferroviaire équipé de la garniture d'étanchéité est une porte, une trappe de visite, une grille, une persienne, une fenêtre, un passe-câbles, un habitacle, une cabine, un coffret, ou toute autre structure comportant un panneau ou un dormant délimitant une ouverture, et une plaque ou un ouvrant, amovible ou non, pour fermer cette ouverture, la garniture d'étanchéité assurant l'étanchéité de la fermeture. Dans une structure comportant plusieurs ouvertures ou interstices, telle qu'une grille ou qu'une persienne, on peut prévoir une garniture d'étanchéité conforme à celle de l'invention dans chacune de ces ouvertures. La garniture d'étanchéité peut également être prévue pour assurer l'étanchéité entre deux pièces du véhicule ferroviaire.

En variante, une seule couche d'étanchéité et une seule couche intumescente successives sont prévues pour le matériau multicouche, la couche intumescente étant rapportée contre la couche d'étanchéité.

En variante, un nombre supérieur à deux de couches d'étanchéité et de couches intumescentes est prévu pour le matériau multicouche, en étant rapportées l'une contre l'autre, par exemple en étant alternées.

## Revendications

1. Véhicule ferroviaire comprenant une structure (20) **caractérisé en ce qu'**il inclut :
- une garniture d'étanchéité (10) comprenant un matériau multicouche (2), lequel comprend :
∘ au moins deux couches d'étanchéité (3, 7) à l'eau ; et
∘ au moins une couche intumescente (5), interposée entre les deux couches d'étanchéité ;
- un panneau (21) pourvu d'une ouverture (22) délimitée par un pourtour d'ouverture (23) du panneau (21), et
- une plaque (25) de fermeture de l'ouverture (22) du panneau (21), la plaque (25) présentant un pourtour de plaque (26), et étant rapportée sur le panneau (21) de façon à recouvrir l'ouverture (22) du panneau (21), le pourtour de plaque (26) recouvrant le pourtour d'ouverture (23) ;
la garniture d'étanchéité (10) présentant une forme correspondant à celle du pourtour d'ouverture (23), et étant interposée, sous une forme compressée, entre le pourtour d'ouverture (23) et le pourtour de plaque (26), de sorte que les deux couches d'étanchéité (3, 7) sont respectivement en contact avec le pourtour d'ouverture (23) et avec le pourtour de plaque (26).

2. Véhicule ferroviaire selon la revendication 1, **caractérisé en ce que** :
- le véhicule comprend au moins un bogie et un châssis inférieur supporté par le bogie, le châssis inférieur comprenant la structure (20) incluant la garniture d'étanchéité (10), la structure (20) constituant une séparation entre un environnement extérieur et un espace intérieur du véhicule ferroviaire ; et
- la structure (20) comprend au moins un élément allongé tel qu'un câble ou un conduit, traversant la plaque (25).

3. Véhicule ferroviaire selon la revendication 1, **caractérisé en ce que** le véhicule ferroviaire comprend au moins une armoire technique, renfermant un équipement dans un volume interne de l'armoire technique, pour assurer le fonctionnement d'un système de motorisation et/ou de freinage du véhicule ferroviaire, l'armoire technique comprenant la structure (20) incluant la garniture d'étanchéité (10), la structure (20) constituant une séparation entre le volume interne et un espace extérieur périphérique de l'armoire technique.

4. Véhicule ferroviaire selon l'une quelconque des revendications précédentes, **caractérisé en ce que** le matériau intumescent est configuré pour évoluer d'un état initial à un état réagi sous l'application d'une température de réaction comprise entre 150 et 180 degrés Celsius.

5. Véhicule ferroviaire selon l'une quelconque des revendications précédentes, **caractérisé en ce que**, lorsque la couche intumescente (5) est à l'état initial, la couche intumescente (5) présente une épaisseur comprise entre 0,5 et 2 millimètres, de préférence 1 millimètre.

6. Véhicule ferroviaire selon l'une quelconque des revendications précédentes, **caractérisé en ce que** chaque couche d'étanchéité (3, 7) comprend une mousse d'élastomère à cellules fermées.

7. Véhicule ferroviaire selon la revendication 6, **caractérisée en ce que** la mousse d'élastomère est en caoutchouc EPDM.

8. Véhicule ferroviaire selon l'une quelconque des revendications précédentes, **caractérisé en ce que**, chaque couche d'étanchéité (3, 7) présente une épaisseur comprise entre 1 et 3 millimètre, de préférence 2 millimètres.

## Patentansprüche

1. Schienenfahrzeug, das eine Struktur (20) umfasst, **dadurch gekennzeichnet, dass** es einschließt:
- eine ein mehrlagiges Material (2) umfassende Dichtung (10), die umfasst:
∘ mindestens zwei wasserdichte Dichtungsschichten (3, 7); und
∘ mindestens eine quellfähige Schicht (5), die zwischen den zwei Dichtungsschichten angeordnet ist;
- eine Tafel (21), die mit einer durch eine Öffnungsumrandung (23) der Tafel (21) begrenzten Öffnung (22) versehen ist, und
- eine Verschlussplatte (25) für die Öffnung (22) der Tafel (21), wobei die Platte (25) eine Plattenumrandung (26) aufweist und an der Tafel (21) derart angesetzt ist, dass sie die Öffnung (22) der Tafel (21) bedeckt, wobei die Plattenumrandung (26) die Öffnungsumrandung (23) bedeckt;
wobei die Dichtung (10) eine Form entsprechend der der Öffnungsumrandung (23) aufweist und in einer komprimierten Form zwischen der Öffnungsumrandung (23) und der Plattenumrandung (26) angeordnet ist, derart, dass die zwei Dichtungsschichten (3, 7) jeweils in Kontakt mit der Öffnungsumrandung (23) und mit der Plattenumrandung (26) sind.

2. Schienenfahrzeug nach Anspruch 1, **dadurch gekennzeichnet, dass**:
- das Fahrzeug mindestens ein Drehgestell und ein von dem Drehgestell gelagertes unteres Chassis umfasst, wobei das untere Chassis die die Dichtung (10) einschließende Struktur (20) umfasst und die Struktur (20) eine Trennung zwischen einer Außenumgebung und einem Innenraum des Schienenfahrzeugs darstellt.

3. Schienenfahrzeug nach Anspruch 1, **dadurch gekennzeichnet, dass** das Schienenfahrzeug mindestens einen Technikschrank, der eine Ausrüstung in einem Innenvolumen des Technikschrankes einschließt, um die Funktionsweise eines Motorisierungs- und/oder Bremssystems des Schienenfahrzeugs sicherzustellen, wobei der Technikschrank die die Dichtung (10) einschließende Struktur (20) umfasst, wobei die Struktur (20) eine Trennung zwischen dem Innenvolumen und einem umgebenden Außenraum des Technikschrankes darstellt.

4. Schienenfahrzeug nach einem beliebigen der vorhergehenden Ansprüche, **dadurch gekennzeichnet, dass** das quellfähige Material ausgebildet ist, einen Anfangszustand in einen Zustand, der durch Anwendung einer Reaktionstemperatur zwischen 150 und 180 °C reagiert hat, umzuwandeln.

5. Schienenfahrzeug nach einem beliebigen der vorhergehenden Ansprüche, **dadurch gekennzeichnet, dass**, wenn die quellfähige Schicht (5) im Anfangszustand ist, die quellfähiges Schicht (5) eine Dicke inbegriffen zwischen 0,5 und 2 mm, vorzugsweise von 1 mm aufweist.

6. Schienenfahrzeug nach einem beliebigen der vorhergehenden Ansprüche, **dadurch gekennzeichnet, dass** jede Dichtungsschicht (3, 7) einen Elastomerschaumstoff mit geschlossenen Poren umfasst.

7. Schienenfahrzeug nach Anspruch 6, **dadurch gekennzeichnet, dass** der Elastomerschaumstoff ein EPDM Kautschuk ist.

8. Schienenfahrzeug nach einem beliebigen der vorhergehenden Ansprüche, **dadurch gekennzeichnet, dass** jede Dichtungsschicht (3, 7) eine Dicke inbegriffen zwischen 1 und 3 mm, vorzugsweise 2 mm aufweist.

## Claims

1. A rail vehicle comprising a structure (20), **characterized in that** it includes:
- a sealing gasket (10) comprising a multilayer material (2), which comprises:
∘ at least two watertight layers (3, 7); and
∘ at least one intumescent layer (5), inserted between the two watertight layers;
- a panel (21) provided with an opening (22) delimited by an opening perimeter (23) of the panel (21), and
- a closing plate (25) of the opening (22) of the panel (21), the plate (25) having a plate perimeter (26), and being attached on the panel (21) so as to cover the opening (22) of the panel (21), the plate perimeter (26) covering the opening perimeter (23);
the sealing gasket (10) having a shape corresponding to that of the opening perimeter (23), and being inserted, in a compressed form, between the opening perimeter (23) and the plate perimeter (26), such that the two sealing layers (3, 7) are respectively in contact with the opening perimeter (23) and with the plate perimeter (26).

2. The rail vehicle according to claim 1, **characterized in that**:
- the vehicle comprises at least a bogie and a lower chassis supported by the bogie, the lower chassis comprising the structure (20) including the sealing gasket (10), the structure (20) constituting a separation between an outside environment and an inner space of the rail vehicle; and
- the structure (20) comprises at least one elongate element such as a cable or a pipe, passing through the plate (25).

3. The rail vehicle according to claim 1, **characterized in that** the rail vehicle comprises at least one equipment cabinet, containing an equipment item in an inner space of the equipment cabinet, to ensure the operation of a motor and/or braking system of the rail vehicle, the equipment cabinet comprising the structure (20) including the sealing gasket (10), the structure (20) forming a separation between the inner space and a peripheral outer area of the equipment cabinet.

4. The rail vehicle according to any one of the preceding claims, **characterized in that** the intumescent material is configured to evolve from an initial state to a reacted state under the application of a reaction temperature of between 150 and 180 degrees Celsius.

5. The rail vehicle according to any one of the preceding claims, **characterized in that**, when the intumescent layer (5) is in the initial state, the intumescent layer (5) has a thickness of between 0.5 and 2 millimeters, preferably 1 millimeter.

6. The rail vehicle according to any one of the preceding claims, **characterized in that** each sealing layer (3, 7) comprises a closed-cell elastomer foam.

7. The rail vehicle according to claim 6, **characterized in that** the elastomer foam is made from an EPDM rubber.

8. The rail vehicle according to any one of the preceding claims, **characterized in that** each sealing layer (3, 7) has a thickness of between 1 and 3 millimeters, preferably 2 millimeters.
